# EUROPÄISCHE PATENTSCHRIFT

(11) **EP 1 091 107 B1**
(45) Veröffentlichungstag und Bekanntmachung des Hinweises auf die Patenterteilung: **28.12.2005**
(21) Anmeldenummer: 00119398.6
(22) Anmeldetag: 12.09.2000
(51) Int. Cl.: F02D 11/10, F02D 41/12, F02D 41/04

(54) **Verfahren und Anordnung zum Verringern von Lastwechselschlägen bei einem Kraftfahrzeug**
Process and device for reducing load change stresses in a motor vehicle
Procédé et dispositif pour réduire les à-coups lors d'un changement de charge dans un véhicule automobile

(30) Priorität: 07.10.1999 DE 19948153
(43) Veröffentlichungstag der Anmeldung: 11.04.2001
(73) Patentinhaber: Volkswagen Aktiengesellschaft, 38436 Wolfsburg (DE)
(72) Erfinder: Mannigel, Dieter, 38118 Braunschweig (DE); Schultalbers, Mathias Dipl.-Ing., 38536 Meinersen/Ahnsen (DE)

(56) Entgegenhaltungen:
- EP-A- 0 631 897
- EP-A- 0 881 376
- DE-A- 3 738 719
- DE-A- 19 538 369
- US-A- 5 921 219
- ROBERT BOSCH GMBH: "Ottomotor-Management" , FRIED. VIEWEG & SOHN VERLAGSGESELLSCHAFT MBH , STUTTGART XP002234336 * Seite 348, Spalte 1, Zeile 27 - Spalte 2, Zeile 13; Abbildung 1 *

## Beschreibung

Die Erfindung betrifft ein Verfahren zum Verringern von Lastwechselschlägen beim Übergang eines Kraftfahrzeugs von Zug- in Schubbetrieb, bei dem an ein den Drehmomentverlauf der Brennkraftmaschine des Kraftfahrzeugs beeinflussendes Stellglied abgegebene Stellbefehle verzögert übertragen werden. Ferner betrifft die Erfindung eine Anordnung zum Verringern von Lastwechselschlägen beim Übergang eines Kraftfahrzeugs von Zug- in Schubbetrieb, mit einem Filter, durch den an ein den Drehmomentverlauf der Brennkraftmaschine des Kraftfahrzeugs beeinflussendes Stellglied abgegebene Stellbefehle verzögert übertragen werden.

Bei Kraftfahrzeugen mit Otto- und Dieselmotoren tritt insbesondere beim negativen Lastwechsel, d.h. beim Übergang von Zug- in Schubbetrieb, oftmals ein sogenannter Lastwechselschlag auf. Diese Erscheinung wird im wesentlichen durch die kinetische Energie der Brennkraftmaschine sowie des Antriebsstrangs bestimmt, die während des Lastwechsels infolge von Elastizitäten und Spiel im Antriebsstrang freigesetzt und zum Teil an die Fahrzeugkarosserie abgegeben wird.

Bei bekannten Kraftfahrzeugen erfolgt der Abbau des Moments beim negativen Lastwechsel bisher in Abhängigkeit des zuvor vom Fahrer geforderten Moments. Dabei wird das Moment aus einer hohen Last langsamer und aus einer niedrigen Last schneller abgebaut. Dies führt zu einem der beiden folgenden Kompromisse.

Entweder reagiert das Kraftfahrzeug aus hoher Last spontan und ruckelt beim Übergang von Teillast-Zugbetrieb in den Schubbetrieb oder das Fahrzeug ist beim Übergang von Teillast-Zugbetrieb in den Schubbetrieb ruckelfrei und schiebt aus Vollast nach.

In der DE 37 38 719 C2 ist ein Verfahren zur Verhinderung störender Lastwechselschläge bei einer Fahrzeug-Brennkraftmaschine beschrieben. Dabei werden von einem Fahrer über ein Gaspedal an ein Leistungsstellglied abgegebene Stellbefehle verzögert übertragen, wobei die Verzögerung auf den Bereich des Nulldurchgangs des Drehmomentverlaufs der Brennkraftmaschine begrenzt wird. Zur Durchführung des Verfahrens wird eine Anordnung verwendet, bei der als Drehmomentsignalerzeuger ein über Sensoren angesteuerter Kennfeldspeicher dient, in welchem die jeweiligen Drehmomentsignale in Abhängigkeit von Signalen eines Drehzahlsensors und Signalen eines Stellungssensors eines Leistungsstellgliedes gespeichert sind. Dabei ist zwischen dem Drehmomentsignalerzeuger und einem Verzögerungssignalerzeuger eine Amplitudenfensterschaltung für die Drehmomentsignale angeordnet, die nur Drehmomentsignale im Bereich des Nulldurchgangs des Drehmomentenverlaufs zum Verzögerungssignalerzeuger zur Aktivierung desselben gelangen läßt.

Aus der DE 195 38 369 A1 ist ein Verfahren und eine Anordnung zum Reduzieren von Lastwechselschlägen bekannt, wobei eine Drehmomentkorrektur der Brennkraftmaschine über eine Steuerung des Zündwinkels durchgeführt wird. Danach wird zunächst das indizierte Basismoment des Motors, welches dem an der Kurbelwelle des Motors abgreifbaren, nicht durch Motor-Verlustmomente verringerten Kupplungsmoment entspricht, bestimmt. Dann wird das indizierte Basismoment durch Filterung in ein indiziertes Soll-Moment überführt, welches bei einem positiven Lastwechsel, d.h. beim Übergang von Schub- in Zugbetrieb einen gegenüber dem indizierten Basismoment geringeren Anstieg aufweist. Schließlich wird aus dem indizierten Soll-Moment ein Soll-Zündwinkel abgeleitet.

Der vorliegenden Erfindung liegt die Aufgabe zugrunde, ein Verfahren und eine Anordnung der eingangs genannten Art anzugeben, das bzw. die das Fahrverhalten eines Kraftfahrzeugs bei negativem Lastwechsel hinsichtlich Spontaneität, Komfort und Kraftstoffverbrauch optimiert.

Diese Aufgabe wird bezüglich des Verfahrens erfindungsgemäß dadurch gelöst, daß bei Vorliegen eines Übergangs von Zug- in Schubbetrieb ein Regelglied, vorzugsweise ein PT-Glied erster Ordnung mit einem Moment, das anhand des vom Fahrer geforderten Drehmoments und eines aktuell berechneten Verlustmoments ermittelt wird, initialisiert wird, so daß der Antriebsstrang des Kraftfahrzeugs lastfrei geschaltet und verzögert auf ein Moment von Null zurückgefahren wird.

Bezüglich der Anordnung wird die Aufgabe erfindungsgemäß dadurch gelöst, daß das Filter ein PT-Glied erster Ordnung ist, dem ein Eingangssignal und ein Initialisierungswert zuführbar sind, wobei das Eingangssignal das vom Fahrer geforderte Drehmoment und der Initialisierungswert ein Moment darstellt, das anhand des vom Fahrer geforderten Drehmoments und eines aktuellen Verlustmoments ermittelt wird, wobei das Filter mit einer das Vorliegen eines Übergangs von Zug- in Schubbetrieb detektierenden Erfassungseinrichtung gekoppelt ist, derart, daß die Initialisierung des Filters nur bei einem detektierten Übergang von Zug- in Schubbetrieb erfolgt.

Die Erfindung basiert auf der Idee, den Übergang vom Zug- in den Schubbetrieb lastunabhängig zu gestalten. Durch das erfindungsgemäße Verfahren bzw. die erfindungsgemäße Anordnung erfolgt somit aus jedem Lastpunkt ein schneller und ruckelfreier Drehmomentabbau. Auf diese Weise wird eine höhere Spontaneität im Fahrverhalten ohne einen Verlust an Komfort sowie ohne höheren Kraftstoffverbrauch erzielt.

Weitere bevorzugte und vorteilhafte Ausgestaltungen der Erfindung sind in den Unteransprüchen angegeben.

Die Erfindung wird nachstehend anhand einer ein Ausführungsbeispiel darstellenden Zeichnung näher erläutert. Im einzelnen zeigen:
- Fig. 1: eine Blockschaltbild für eine bevorzugte Anordnung zur Durchführung des erfindungsgemäßen Verfahrens und
- Fig. 2: einen Drehmomentverlauf bei Anwendung des erfindungsgemäßen Verfahrens.

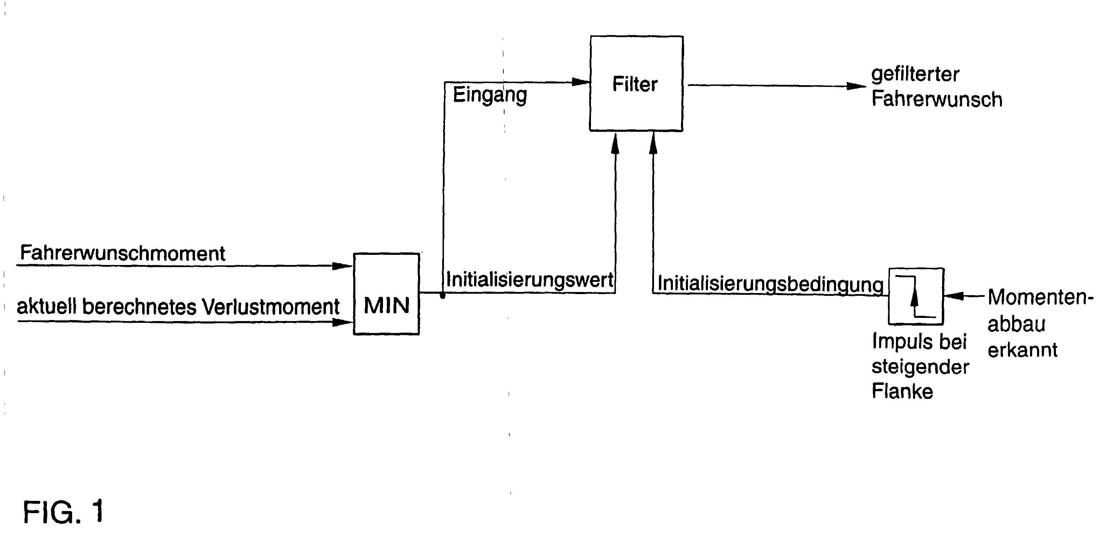

Wie in Fig. 1 schematisch dargestellt ist, umfaßt die erfindungsgemäße Anordnung ein Filter, bei dem es sich um ein PT-Glied erster Ordnung handelt. Das Filter ist mit einer Erfassungeinrichtung gekoppelt, die einen Übergang des betreffenden Kraftfahrzeugs vom Zug- in den Schubbetrieb detektiert. Hierzu wird der Drehmomentverlauf des Brennkraftmotors des Fahrzeugs auf das Auftreten eines negativen Lastwechsels hin überwacht.

Das Filter weist einen Eingang auf, über den ein Signal zugeführt wird, das dem vom Fahrer gewünschten Drehmoment entspricht. Ferner wird dem Filter ein Initialisierungswert zugeführt, der ein Moment darstellt, das anhand des vom Fahrer gewünschten Drehmoments und eines aktuell berechneten Verlustmoments ermittelt wird. Das Verlustmoment umfaßt dabei auch eventuelle weitere Verbrauchermomente, beispielsweise das von der Lichtmaschine oder das von einer Klimaanlage geforderte Drehmoment. Die Initialisierung des Filters erfolgt erfindungsgemäß nur dann, wenn die Erfassungseinrichtung einen Zug-Schub-Übergang detektiert hat. In diesem Fall wird der Antriebsstrang des Kraftfahrzeugs lastfrei geschaltet und mittels des Filters relativ langsam auf ein Moment von Null zurückgefahren. Das Ausgangssignal des Filters dient dabei als Stellsignal eines Leistungsstellgliedes der Brennkraftmaschine.

Nach einer bevorzugten Ausgestaltung des erfindungsgemäßen Verfahrens kann vorgesehen sein, daß die Zeitkonstante des
PT1-Gliedes in Abhängigkeit des Verlustmoments eingestellt wird.

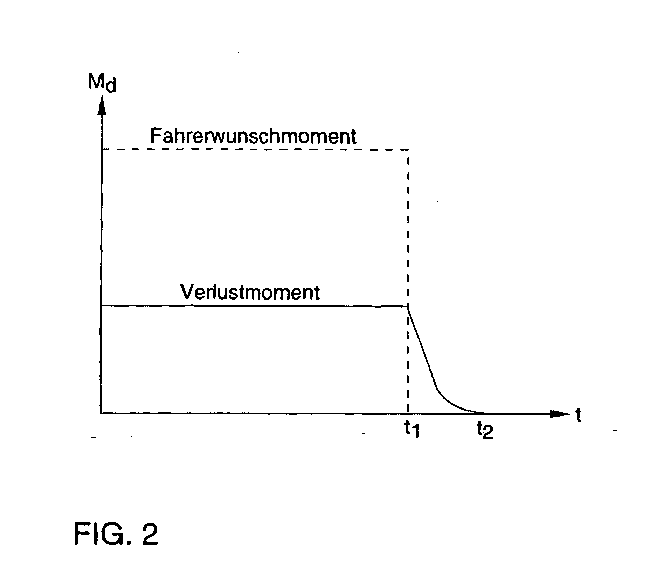

In Fig. 2 ist schematisch ein Drehmomentverlauf bei Anwendung des erfindungsgemäßen Verfahrens dargestellt. Die Brennkraftmaschine befindet sich zunächst im Zugbetrieb, so daß das Drehmoment M_{d} einen positiven Wert hat. Im Zeitpunkt t₁ wird die Drosselklappe oder ein entsprechendes Regelglied einer Kraftstoffeinspritzvorrichtung der Brennkraftmaschine plötzlich geschlossen, wobei eine sehr schnelle Gaspedalbetätigung unterstellt wird. Ohne die erfindungsgemäße Anordnung würde sich im Zeitpunkt t₁ in etwa der durch die gestrichelte Kurve gekennzeichnete Drehmomentverlauf einstellen. In diesem Fall ist im Bereich des Nulldurchgangs des Drehmomentverlaufs mit unangenehmen Lastwechselschlägen zu rechnen.

Mit der Erfassungseinrichtung der erfindungsgemäßen Anordnung wird ein steiler Abfall des Drehmomentverlaufs jedoch unmittelbar erkannt und sodann die Initialisierung des Filters mit einem Moment, welches anhand des vom Fahrer geforderten Drehmoments und des aktuell berechneten Verlustmoments ermittelt wird, zugelassen. Im Ergebnis wird der Antriebsstrang des Kraftfahrzeugs lastfrei geschaltet und mittels des als PT-Glied erster Ordnung ausgebildeten Filters in dem Zeitraum t₁ bis t₂ auf ein Drehmoment von Null zurückgefahren, wie in Fig. 2 durch die strichpunktierte Kurve schematisch gezeigt ist. Der Abbau des Drehmoments erfolgt somit aus jedem Lastpunkt ruckelfrei und im Vergleich zu einem Momentenabbau ohne Filter noch immer relativ schnell.

## Patentansprüche

1. Verfahren zum Verringern von Lastwechselschlägen beim Übergang eines Kraftfahrzeugs von Zug- in Schubbetrieb, bei dem an ein den Drehmomentverlauf der Brennkraftmaschine des Kraftfahrzeugs beeinflussendes Stellglied abgegebene Stellbefehle verzögert übertragen werden,
**dadurch gekennzeichnet, daß** bei Vorliegen eines Übergangs von Zug- in Schubbetrieb ein Regelglied mit einem Moment, das anhand des vom Fahrer geforderten Drehmoments und eines aktuell berechneten Verlustmoments ermittelt wird, initialisiert wird, so daß der Antriebsstrang des Kraftfahrzeugs lastfrei geschaltet und verzögert auf ein Moment von Null zurückgefahren wird.

2. Verfahren nach Anspruch 1,
**dadurch gekennzeichnet, daß** die Zeitkonstante des Regelgliedes in Abhängigkeit des Verlustmoments eingestellt wird.

3. Verfahren nach Anspruch 1, **daddurch gekennzeichnet, daß** das Regelglied als ein PT-Glied erster Ordnung ausgebildet ist.

4. Anordnung zum Verringern von Lastwechselschlägen beim Übergang eines Kraftfahrzeugs von Zug- in Schubbetrieb, mit einem Filter, durch das an ein den Drehmomentverlauf der Brennkraftmaschine des Kraftfahrzeugs beeinflussendes Stellglied abgegebene Stellbefehle verzögert übertragen werden,
**dadurch gekennzeichnet, daß** das Filter ein PT-Glied erster Ordnung ist, dem ein Eingangssignal und ein Initialisierungswert zuführbar sind, wobei das Eingangssignal das vom Fahrer geforderte Drehmoment und der Initialisierungswert ein Moment darstellt, das anhand des vom Fahrer geforderten Drehmoments und eines aktuellen Verlustmoments ermittelt wird, und daß das Filter mit einer das Vorliegen eines Übergangs von Zug- in Schubbetrieb detektierenden Erfassungseinrichtung gekoppelt ist, derart, daß die Initialisierung des Filters nur bei einem detektierten Übergang von Zug- in Schubbetrieb erfolgt.

## Claims

1. Method for reducing load change stresses when changing over a motor vehicle from traction mode to overrun conditions in which actuating instructions which are output to an actuating element which influences the torque profile of the internal combustion engine of the motor vehicle are transmitted in a delayed fashion, **characterized in that** when a transition from traction mode to overrun conditions occurs a control element is initialized with a torque which is determined by reference to the torque which is requested by the driver and a loss torque which is calculated on a current basis, with the result that the drive train of the motor vehicle is switched in a load-free fashion and a zero torque is returned to in a delayed fashion.

2. Method according to Claim 1, **characterized in that** the time constant of the control element is set as a function of the torque loss.

3. Method according to Claim 1, **characterized in that** the control element is embodied as a PT element of the first order.

4. Arrangement for reducing the load change stresses at the transition of a motor vehicle from traction mode to overrun conditions, having a filter by means of which actuating instructions which are output to an actuating element which influences the torque profile of the internal combustion engine of the motor vehicle are transmitted in a delayed fashion, **characterized in that** the filter is a PT element of the first order to which an input signal and an initialization value can be fed, with the input signal representing the torque which is requested by the driver and the initialization value representing a torque which is determined by reference to the torque which is requested by the driver and a current torque loss, and **in that** the filter is coupled to a detection device which detects the presence of a transition from traction mode to overrun conditions in such a way that the filter is initialized only at a detected transition from traction mode to overrun conditions.

## Revendications

1. Procédé de réduction des à-coups de changement de charge lors du passage d'un véhicule automobile d'un fonctionnement en traction à un fonctionnement en poussée, dans lequel des instructions de réglage émises sont transmises avec un délai à un élément de réglage ayant une influence sur l'évolution de couple de rotation du moteur à combustion interne du véhicule automobile,
**caractérisé en ce qu'**en présence d'un passage du fonctionnement en traction au fonctionnement en poussée, un élément de réglage est initialisé avec un couple qui est déterminé à l'aide du couple de rotation requis par le conducteur et d'un moment de perte calculé à l'instant donné, de sorte que la ligne motrice du véhicule automobile est commutée sans charge et est ramenée avec un délai à un couple de zéro.

2. Procédé selon la revendication 1,
**caractérisé en ce que** la constante de temps de l'élément de réglage est ajustée en fonction du moment de perte.

3. Procédé selon la revendication 1,
**caractérisé en ce que** l'élément de réglage est réalisé sous forme d'un élément PT de premier ordre.

4. Dispositif de réduction des à-coups de changement de charge lors du passage d'un véhicule automobile d'un fonctionnement en traction à un fonctionnement en poussée, comportant un filtre grâce auquel des instructions de réglage émises sont transmises avec un délai à un élément de réglage ayant une influence sur l'évolution de couple de rotation du moteur à combustion interne du véhicule automobile,
**caractérisé en ce que** le filtre est un élément PT de premier ordre auquel peuvent être communiqués un signal d'entrée et une valeur d'initialisation, le signal d'entrée représentant le couple de rotation requis par le conducteur et la valeur d'initialisation représentant un moment qui est déterminé sur la base du couple de rotation requis par le conducteur et d'un moment de perte à l'instant donné, et que le filtre est couplé à un dispositif d'enregistrement détectant la présence d'un passage du fonctionnement en traction au fonctionnement en poussée de manière à ce que l'initialisation du filtre n'ait lieu que s'il y a détection d'un passage du fonctionnement en traction au fonctionnement en poussée.
